# EUROPÄISCHE PATENTANMELDUNG

(11) **EP 1 382 619 A2**
(43) Veröffentlichungstag der Anmeldung: **21.01.2004**
(21) Anmeldenummer: 03015871.1
(22) Anmeldetag: 11.07.2003
(51) Int. Cl.: C08F 212/32, C08F 257/00

(54) **Pfropfcopolymere, deren Herstellung und Verwendung**

(30) Priorität: 16.07.2002 DE 10232299
(71) Anmelder: BASF AKTIENGESELLSCHAFT, 67056 Ludwigshafen (DE)
(72) Erfinder: Heischkel, Yvonne, Dr., 68199 Mannheim (DE); Stöckel, Nicolas, Dr., 67269 Grünstadt (DE); Wieland, Philipp, 80935 München (DE); Schäfer, Marcus, Dr., 47802 Krefeld (DE); Nuyken, Oskar, Prof.Dr., 81927 München (DE)
(74) Vertreter: Isenbruck, Günter, Dr.

(57) **Zusammenfassung**

Die Erfindung betrifft ein Verfahren zur Herstellung eines mit Halogen oder Sulfonylchlorid enthaltenden Gruppen funktionalisierten Umsetzungsproduktes (U) durch Reaktion mindestens eines radikalisch polymerisierbaren Monomeren, mindestens einer Verbindung der allgemeinen Formel (I), 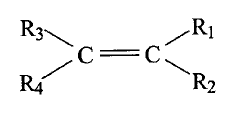 mindestens eines radikalischen Initiators und mindestens einem Halogen oder Sulfonylchlorid Gruppen enthaltenden, radikalisch polymerisierbaren Monomeren unter radikalischen Bedingungen, sowie ein Umsetzungsprodukt (U) herstellbar nach dem erfindungsgemäßen Verfahren und die Verwendung des Umsetzungsproduktes (U) als Makroinitiator zur Herstellung von Pfropfcopolymeren. Des weiteren betrifft die Erfindung ein Verfahren zur Herstellung von Pfropfcopolymeren durch Reaktion des Umsetzungsproduktes (U) mit mindestens einem geeigneten Monomeren und Pfropfcopolymere herstellbar nach dem erfindungsgemäßen Verfahren sowie die Verwendung der erfindungsgemäßen Pfropfcopolymere.

## Beschreibung

Die vorliegende Erfindung betrifft ein Verfahren zur Herstellung eines funktionalisierten Umsetzungsproduktes (U) durch Reaktion unter radikalischen Bedingungen sowie das funktionalisierte Umsetzungsprodukt selbst und dessen Verwendung als Makroinitiator zur Herstellung von Pfropfcopolymeren. Des weiteren betrifft die vorliegende Erfindung ein Verfahren zur Herstellung von Pfropfcopolymeren durch Reaktion des Umsetzungsproduktes (U), Pfropfcopolymere herstellbar nach diesem Verfahren sowie die Verwendung der erfindungsgemäß herstellbaren Pfropfcopolymere.

Pfropfcopolymere sind Zielstrukturen mit einer stetig wachsenden großen Bedeutung in der Polymerchemie. Solche Polymere sind für zahlreiche Anwendungen, insbesondere zum Einsatz in Polymermischungen, zur Anpassung der Eigenschaften dieser Mischungen an gewünschte Eigenschaftsprofile, geeignet. Es gibt verschiedene Verfahren zur Herstellung von Pfropfcopolymeren. Einer der effizientesten Wege zur Herstellung definierter Pfropfcopolymere ist dabei die Herstellung von Pfropfcopolymeren durch "grafting from", ausgehend von einem definierten Makroinitiator, wobei dieser durch kationische Polymerisation mit geeigneten Monomeren gepfropft wird.

Eine große Zahl von Makroinitiatoren, geeignet für radikalische oder ionische Polymerisation, die durch nahezu alle möglichen Polymerisationstechniken hergestellt wurden, ist aus dem Stand der Technik bekannt. Eine Schwierigkeit ist jedoch die Einführung von z.B. zur kationischen Polymerisation geeigneten Initiatorfunktionen in den Makroinitiator. Solche interessanten Initiatorfunktionen sind Halogen oder Sulfonylchlorid enthaltende Gruppen. Es ist jedoch problematisch, definierte mit den genannten funktionellen Gruppen funktionalisierte Makroinitiatoren durch übliche radikalische Polymerisationsverfahren herzustellen, da diese Initiatorfunktionen eine starke Übertragungsneigung zeigen und des weiteren gegenüber anionischen Katalysatoren oder Übergangsmetallkatalysatoren reaktiv sind. Aus dem Stand der Technik sind verschiedene Ansätze zur Lösung dieses Problems bekannt.

So betrifft Bertin et al., Polymer Bull. 1996, 37, 337 die kontrollierte radikalische Polymerisation (CRP) von 4-Vinylbenzylchlorid (CMS) mit TEMPO und dessen Copolymerisation mit Styrol. Der Einsatz von TEMPO ist jedoch auf Styrolderivate beschränkt, da TEMPO nicht zur Polymerisation oder Copolymerisation polarer Monomere wie Methylmethacrylat (MMA) geeignet ist.

Auch die ATRP (Atom Transfer Radical Polymerization) ist nicht geeignet, um die gewünschten mit Halogen oder Sulfonylchlorid enthaltenden Gruppen funktionalisierten Makroinitiatoren herzustellen, da Halogen enthaltende Monomere selbst Initiatoren für die ATRP sind.

Aus dem Stand der Technik ist des weiteren die kontrollierte radikalische Polymerisation in Anwesenheit von Diphenylethen (DPE) oder dessen Derivaten bekannt.

WO 00/37507 betrifft ein Verfahren zur Herstellung eines Umsetzungsproduktes (A), das die folgende Stufe (i) umfaßt:
(i) Reaktion unter radikalischen Bedingungen eines Reaktionsgemischs, umfassend mindestens ein radikalisch umsetzbares Monomers (a) in Gegenwart mindestens eines radikalischen Initiators sowie einer Verbindung der Formel 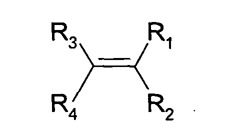
wobei R₁ bis R₄ jeweils unabhängig voneinander Wasserstoff, einen jeweils unsubstituierten oder substituierten Alkylrest, Cycloalkylrest, Aralkylrest, einen unsubstituierten oder einen substituierten aromatischen Kohlenwasserstoffrest darstellen, mit der Maßgabe, dass mindestens zwei der R₁ bis R₄ einen unsubstituierten oder einen substituierten aromatischen Kohlenwasserstoffrest darstellen,
in wässriger Phase, sowie ein Verfahren zur Herstellung eines Polymers unter Verwendung dieses Umsetzungsproduktes. Umsetzungsprodukte, die Halogen oder Sulfonylchlorid enthaltende Gruppen tragen, und somit als Makroinitiatoren insbesondere für die kationische Polymerisation, geeignet sind, sind nicht offenbart.

DE-A 199 61 063 betrifft ein Verfahren zur Herstellung eines Umsetzungsproduktes (A), das die folgende Stufe (i) umfasst:
(i) Reaktion unter radikalischen Bedingungen eines Reaktionsgemischs, umfassend mindestens ein radikalisch umsetzbares Monomers (a) in Gegenwart mindestens eines radikalischen Initiators sowie einer Verbindung, der Formel 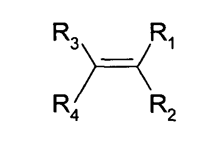
worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, dass mindestens zwei der Reste R₁ bis R₄ für einen unsubstituierten oder einen substituierten aromatischen Kohlenwasserstoffrest stehen, oder die Reste R¹ und R² oder R³ und R⁴ jeweils paarweise für einen substituierten oder unsubstituierten aromatischen Kohlenwasserstoff mit 6 bis 18 C-Atomen und eine funktionelle Gruppe, die in Konjugation zur C-C-Doppelbindung in der allgemeinen Formel I eine Mehrfachbindung zwischen einem C-Atom und einem Heteroatom aufweist, stehen,
wobei während Reaktion im Reaktionsgemisch 10 Gew.-% Wasser oder weniger vorliegen.

Des weiteren betrifft DE-A 199 61 063 ebenfalls ein Verfahren zur Herstellung eines Polymers unter Verwendung des Umsetzungsproduktes (A). Auch in dieser Anmeldung sind keine Umsetzungsprodukte, die Halogen oder Sulfonylchlorid enthaltende Gruppen tragen, offenbart.

Eine Aufgabe der vorliegenden Anmeldung ist daher die Bereitstellung eines Verfahrens zur Herstellung von mit Halogen oder Sulfonylchlorid enthaltenden Gruppen funktionalisierten Umsetzungsprodukten, wobei Halogen oder Sulfonylchlorid enthaltende Monomere in Polymere eingebaut werden können, ohne dass die Halogen oder Sulfonylchlorid enthaltenden Gruppen dabei verloren gehen, so dass Polymere erhalten werden, die als Initiatorfunktion geeignete Halogen oder Sulfonylchlorid enthaltende Gruppen enthalten. Solche Polymere besitzen ein großes Potential für zahlreiche Anwendungen.

Diese Aufgabe wird durch ein Verfahren zur Herstellung eines mit Halogen oder Sulfonylchlorid enthaltenden Gruppen fünktionalisierten Umsetzungsproduktes (U) durch Reaktion der folgenden Komponenten unter radikalischen Bedingungen gelöst:
a) mindestens ein radikalisch polymerisierbares Monomeres als Komponente (A),
b) mindestens eine Verbindung der allgemeinen Formel (I), als Komponente (B) 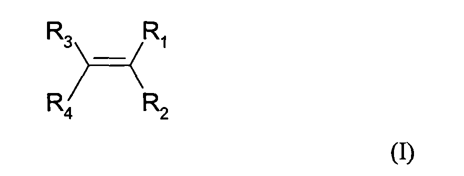 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, dass mindestens zwei der Reste R₁ bis R₄ für einen unsubstituierten oder einen substituierten aromatischen Kohlenwasserstoffrest stehen, oder die Reste R₁ und R₂ oder R₃ und R₄ jeweils paarweise für einen substituierten oder unsubstituierten aromatischen Kohlenwasserstoff mit 6 bis 18 C-Atomen und eine funktionelle Gruppe, die in Konjugation zu C-C-Doppelbindung in der allgemeinen Formel (I) eine Mehrfachbindung zwischen einem C-Atom und einem Heteroatom aufweist, stehen,
c) mindestens ein radikalischer Initiator als Komponente (C),
d) mindestens ein Halogen oder Sulfonylchloridgruppen enthaltendes, radikalisch polymerisierbares Monomer, als Komponente (D).

Eine weitere Aufgabe der vorliegenden Anmeldung ist die Bereitstellung eines Verfahrens zur Herstellung von definierten Pfropfcopolymeren.

Diese Aufgabe wird gelöst durch ein Verfahren zur Herstellung von Pfropfcopolymeren durch Reaktion eines Umsetzungsproduktes (U) gemäß der vorliegenden Anmeldung mit mindestens einem geeigneten Monomeren (Komponente (E)). Bevorzugt ist diese Reaktion eine kationische Polymerisation.

### Komponente A:

Im Rahmen des erfindungsgemäßen Verfahrens können alle radikalisch umsetzbaren Monomere als Monomeres (Komponente A) eingesetzt werden.

Beispielsweise können als Monomere (Komponente A) radikalisch homo- oder copolymerisierbare Verbindungen eingesetzt werden, die eine hydrophile Gruppe, z.B. eine Carboxylgruppe, umfassen. In diesem Falle handelt es sich bei den Monomeren (Komponente A) um hydrophile, radikalisch homo- oder copolymerisierbare Monomere, d.h. um Monomere, deren Löslichkeit in Wasser höher als die von Styrol ist.

Selbstverständlich können auch Gemische verschiedener hydrophiler Monomere im Rahmen der vorliegenden Erfindung als Monomere (Komponente A) eingesetzt werden.

Im Rahmen einer weiteren Ausführungsform der vorliegenden Erfindung können jedoch auch radikalisch polymerisierbare Monomere eingesetzt werden, die eine Wasserlöslichkeit aufweisen, die derjenigen von Styrol entspricht oder sogar geringer ist.

Darüber hinaus lassen sich gemäß dem erfindungsgemäßen Verfahren auch Gemische aus mindestens einem hydrophilen Monomeren und mindestens einem hydrophoben Monomeren polymerisieren. Im einzelnen sind als Monomere (Komponente A) zu nennen:

C₁- bis C₂₀-Alkyl- und Hydroxyalkylester von monoethylenisch ungesättigten C₃- bis C₁₀-Monocarbonsäuren oder C₄- bis C₈-Dicarbonsäuren, beispielsweise Methylmethacrylat, Ethylmethacrylat, Propylmethacrylat (alle Isomere), Butylmethacrylat (alle Isomere), 2-Ethylhexylmethacrylat, Isobomylmethacrylat, Methylacrylat, Ethylacrylat, Propylacrylat (alle Isomere), Butylacrylat (alle Isomere), 2-Ethylhexylacrylat, Isobomylacrylat, Benzylacrylat, Phenylacrylat, Stearylacrylat, Maleinsäurediethylester, Hydroxyethylacrylat, Hydroxypropylacrylat, Hydroxybutylacrylat, weiterhin (Meth)Acrylester von alkoxylierten C₁- bis C₁₈-Alkoholen, die mit 2 bis 50 mol Ethylenoxid, Propylenoxid, Butylenoxid oder Mischungen hiervon umgesetzt sind; Benzylmethacrylat, Phenylmethacrylat, Stearylmethacrylat, Methacrylnitril, Styrol, α-Methylstyrol, Acrylnitril, funktionalisierte Methacrylate; Acrylate und Styrole, ausgewählt unter Glycidylmethacrylat, 2-Hydroxyethylmethacrylat, Hydroxypropylmethacrylat (alle Isomere), Hydroxybutylmethacrylat (alle Isomere), Diethylaminoethylmethacrylat, Triethylenglycolmethacrylat, Itaconsäureanhydrid, Itaconsäure, Glycidylacrylat, 2-Hydroxyethylmethacrylat, Diethylaminoethylacrylat, Triethylenglycolacrylat, Methacrylamid, N-tert.-Butylmethacrylamid, N-n-Butylmethacrylamid, N-Methylolmethacrylamid, N-Ethylolmethacrylamid, N-tert-Butylacrylamid, N-Butylacrylamid, N-Methylolacrylamid, N-Ethylolacrlyamid, Vinylbenzoesäure (alle Isomere), Diethylaminostyrol (alle Isomere), α-Methylvinylbenzoesäure (alle Isomere), Diethylamino-α-methylstyrol (alle Isomere), p-Methylstyrol, p-Vinylbenzolsulfonsäure, Trimethoxysilylpropylmethacrylat, Triethoxysilylpropylmethacrylat, Tributoxysilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Vinylacetat und Vinylbutyrat, Vinylchlorid, Vinylfluorid, Vinylbromid, Vinylalkohol, Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, monoethylenisch ungesättigte C₃- bis C₁₀-Monocarbonsäuren, deren Alkalimetallsalze und/oder Ammoniumsalze, beispielsweise Acrylsäure, Methacrylsäure, Dimethylacrylsäure, Ethylacrylsäure, Allylessigsäure oder Vinylessigsäure, weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Maleinsäureanhydrid, Itaconsäureanhydrid oder Methylmalonsäureanhydrid; weiterhin Sulfonsäuregruppen enthaltende monoethylenisch ungesättigte Monomere, beispielsweise Allylsulfonsäure, Styrolsulfonsäure, 2-Acryl-amido-2-methylpropansulfonsäure, Methallylsulfonsäure, Vinylsulfonsäure, Acrylsäure-3-sulfopropyl-ester oder Methacrylsäure-3-sulfopropylester, weiterhin Phosphonsäuregruppen enthaltende monoethylenisch ungesättigte Monomere, beispielsweise Vinylphosphonsäure, Allylphosphonsäure oder Acrylamidoethylpropanphosphonsäure, weiterhin Amide und N-substituierte Amide von monoethylenisch ungesättigten C₃- bis C₁₀-Monocarbonsäuren oder C₄- bis C₈-Dicarbonsäuren, beispielsweise Acrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.-Butylacrylamid oder N-Octadecylacrylamid, Maleinsäuremonomethylhexylamid, Maleinsäuremonodecylamid, Diethylaminopropylmethacrylamid oder Acrylamidoglykolsäure; weiterhin Alkylaminoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat; weiterhin Vinylester wie Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylcaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, Styrol oder dessen Derivate wie α-Methylstyrol, Inden, Dicyclopentadien, Monomere, die Aminooder Iminogruppen wie Dimethylaminoethylmethacrylat, Diethylaminoethylacrylat, Diethylaminopropylmethacrylamid oder Allylamin, Monomere, die quartäre Ammoniumgruppen tragen, wie z.B. vorliegend als Salze, wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z.B. Dimethylaminoethylacrylat-hydrochlorid, Diallyldimethylammoniumchlorid, Dimethylaminoethylacrylat-methylchlorid, Dimethylaminoethylaminopropylmethacrylamid-methosulfat, Vinylpyridiniumsalze oder 1-Vinylimidazoliumsalze; Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid sowie Gemische aus zwei oder mehr der vorstehend genannte Monomere.

Im Rahmen einer bevorzugten Ausführungsform finden als ein erstes Monomeres (Komponente A) Styrol, Acryl- oder Methacrylsäure, ein C₁₋₁₀-, bevorzugt ein C₁-C₄-Alkyl- oder -Hydroxyalkylacrylat oder -methacrylat, besonders bevorzugt Methylmethacrylat (MMA), Vinylacetat, ein substituiertes oder unsubstituiertes Vinylpyrrolidon, oder ein Gemisch aus zwei oder mehr der genannten Monomere Verwendung. Ganz besonders bevorzugt wird ein Gemisch aus Styrol und MMA eingesetzt.

### Komponente B

Als Komponente (B) wird eine Verbindung der Formel (I) 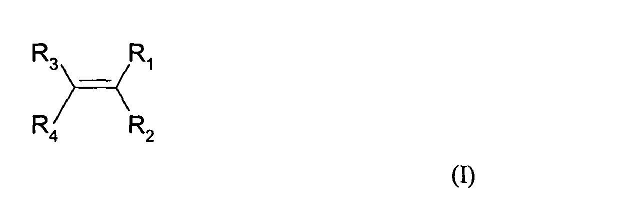 eingesetzt, worin R₁ bis R₄ die oben genannte Bedeutung aufweisen. Unter einem "Heteroatom" wird im Rahmen der vorliegenden Erfindung ein von Kohlenstoff verschiedenes Atom verstanden, das zur Ausbildung von Mehrfachbindungen (Doppeloder Dreifachbindungen) mit einem C-Atom fähig ist.

Im Rahmen einer bevorzugten Ausführungsform der Erfindung werden als Verbindung der allgemeinen Formel (I) 1,1-Diphenylethen, Alkoxydiphenylethylen, 1,1-Dinaphthylethen, 4,4-Vinylidenbis(N,N'-dimethylanilin), 4,4-Vinylidenbis(1-aminobenzol), cis-Stilben, trans-Stilben, α-Phenylacrylsäuremethylester, α-Phenylmethacrylsäuremethylester, α-Phenylacrylnitril, α-Phenylmethacrylnitril oder ein Gemisch aus zwei oder mehr davon eingesetzt. Besonders bevorzugt wird als Verbindung der allgemeinen Formel (I) 1,1-Diphenylethen eingesetzt.

Ebenfalls als Verbindung der allgemeinen Formel (I) geeignet sind substituierte Diphenylethene, die entweder an einem oder beiden aromatischen Kohlenwasserstoffresten mit elektronenziehenden oder elektronenschiebenden Substituenten, wie z.B. tert.-Butyl-, Benzyl- oder CN-Gruppen substituiert sind, oder ein Alkoxydiphenylethylen, wie z.B. Methoxy-, Ethoxy- oder tert.-Butyloxydiphenylethylen, sowie die analogen Thio- oder Aminoverbindungen, eingesetzt werden.

### Komponente C:

Das erfindungsgemäße Verfahren wird in Gegenwart mindestens eines radikalischen Initiators durchgeführt, wobei hier oxidierende radikalische Initiatoren bevorzugt sind.

Vorzugsweise sollte der Initiator im verwendeten Lösemittel oder zumindest in den zur Polymerisation eingesetzten Monomeren löslich sein. Im allgemeinen können jedoch alle bei der Radikalkettenpolymerisation herkömmlicherweise verwendeten Azo- und/oder Peroxo-Verbindungen eingesetzt werden.

Geeignete Initiatoren sind in der WO 98/01478 auf S. 10, Z. 17-34 beschrieben, die diesbezüglich vollumfänglich in den Kontext der vorliegenden Anmeldung aufgenommen wird.

Ganz besonders bevorzugt werden AIBN oder Benzoylperoxid als radikalische Initiatoren eingesetzt.

In einer bevorzugten Ausführungsform des erfindungsgemäßen Verfahrens wird eine vergleichsweise große Menge an radikalischem Initiator zugegeben, wobei der Anteil an radikalischem Initiator am Reaktionsgemisch bevorzugt 0,5 bis 20 Gew.-%, besonders bevorzugt 1 bis 10 Gew.-%, jeweils bezogen auf die Gesamtmenge der Komponenten (A), (B) und (D), beträgt. Vorzugsweise beträgt das Verhältnis Initiator zu Verbindung der allgemeinen Formel I 3:1 bis 1:3, weiter bevorzugt 2:1 bis 1:2, und insbesondere 1,5:1 bis 1:1,5.

### Komponente D:

Als Komponente D wird erfindungsgemäß ein halogeniertes oder Sulfonylgruppen enthaltendes, radikalisch polymerisierbares Monomeres eingesetzt.

Bevorzugt wird als Monomeres 2-Chloropropen oder ein Monomeres der allgemeinen Formel (II) eingesetzt: 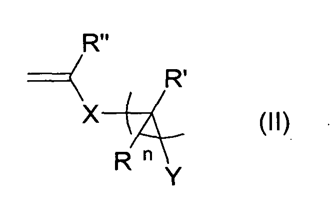 worin
- X: eine Einfachbindung oder ein substituierter oder unsubstituierter Arylenrest ist, bevorzugt ein mit einer bis 4 Alkylgruppen substituierter Arylenrest, wobei die Alkylgruppen bevorzugt C₁- bis C₁₀-Alkylgruppen sind oder ein Phenylenrest, oder ein substituierter oder unsubstituierter Alkylenrest, bevorzugt ein C₂- bis C₄-Alkylenrest, der gegebenenfalls mit einer oder mehreren Alkylgruppen substituiert ist, wobei die Alkylgruppen bevorzugt C₁- bis C₅-Alkylgruppen sind, oder ein Rest der allgemeinen Formel 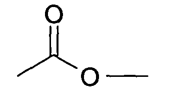 besonders bevorzugt ist X ein mit einer bis 4 C₁- bis C₁₀-Alkylgruppen substituierter Arylenrest, ein Phenylenrest oder ein Rest der allgmeinen Formel 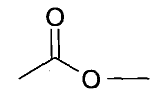 ganz besonders bevorzugt ist X ein Phenylenrest;
- R, R' und R": Wasserstoff oder ein C₁- bis C₅-Alkylrest bedeuten, bevorzugt Methyl, Ethyl oder Wasserstoff, ganz besonders bevorzugt Wasserstoff oder Methyl;
- n: eine Zahl von 1 bis 3, bevorzugt 1 ist,
und
- Y: ein Halogenrest, bevorzugt C1 oder ein Sulfonylchloridrest ist.

Ganz besonders bevorzugt ist die Komponente (D) 2-Chloropropen oder eine Verbindung der Formel (II) ausgewählt aus der Gruppe bestehend aus 4-(Chlormethyl)styrol (CMS).

Bevorzugt werden 30 bis 98,9 Gew.-%, bevorzugt 60 bis 97,5 Gew.-% der Komponente (A),
0,1 bis 20 Gew.-%, bevorzugt 0,5 bis 10 Gew.-% der Komponente (B),
1 bis 50 Gew.-%, bevorzugt 2 bis 30 Gew.-%, besonders bevorzugt 5 bis 25 Gew.-% der Komponente (D) in dem erfindungsgemäßen Verfahren eingesetzt,
wobei die Summe der Komponenten (A), (B) und (D) 100 Gew.-% ergibt,
und
0,5 bis 20 Gew.-%, bevorzugt 1 bis 10 Gew.-% der Komponente (C), bezogen auf die Summe der Komponenten (A), (B), und (D).

Das erfindungsgemäße Verfahren kann in einem organischen Lösungsmittel oder lösungsmittelfrei ("in Substanz"), gegebenenfalls in Gegenwart von Wasser, oder in wässriger Phase durchgeführt werden. Im Rahmen einer bevorzugten Ausführungsform der vorliegenden Erfindung wird das erfindungsgemäße Verfahren in einem organischen Lösungsmittel durchgeführt.

Als Lösungsmittel eignen sich im Rahmen der vorliegenden Erfindung grundsätzlich alle polaren und unpolaren organischen Lösungsmittel, in denen die entsprechenden Komponenten und vorzugsweise auch die entstehenden Polymere, gegebenenfalls bei erhöhter Temperatur, löslich sind. Geeignete Lösungsmittel sind beispielsweise C3 bis C10 Alkane, Cyclohexan, Decalin, Aceton, Methylethylketon, Diisobutylketon, Tetrahydrofuran, Dioxan, Benzol, Toluol, Glykole wie Ethylenglykol, Triethylenglykol, teilweise oder völlig endgruppenverschlossene Glykolether wie Ethylenglykolmonomethylether, Essigsäureethylester, Methanol oder Ethanol oder die höheren Homologen der Alkanole mit bis zu 18 C-Atomen (gegebenenfalls als Cosolvens) oder Gemische aus zwei oder mehr davon. Besonders bevorzugt wird Toluol als Lösungsmittel eingesetzt.

Das erfindungsgemäße Verfahren wird im allgemeinen bei Temperaturen oberhalb Raumtemperatur und unterhalb der Zersetzungstemperatur der Monomeren durchgeführt, wobei vorzugsweise ein Temperaturbereich von 50 bis 150 °C, besonders bevorzugt 60 bis 120 °C und ganz besonders 70 bis 110 °C gewählt wird.

Das erfindungsgemäße Verfahren wird im allgemeinen bei Drücken von 1 bis 300 bar, bevorzugt 1,5 bis 100 bar, besonders bevorzugt 2 bis 20 bar durchgeführt.

Das zahlenmittlere Molekulargewicht (Mₙ; ermittelt mittels Gelpermeationschromatographie (GPC)) der gemäß dem Verfahren der vorliegenden Anmeldung herstellbaren Umsetzungsprodukte (U) beträgt im allgemeinen 500 bis 10⁶, bevorzugt 1000 bis 5*10⁵, besonders bevorzugt 2000 bis 10⁵.

Die Molekulargewichte des Umsetzungsprodukts (U) sind durch die Wahl der Verhältnisses Monomere (Komponenten A und D) zu Verbindungen (I) (Komponente B) zu radikalischem Initiator (Komponente C) in weiten Grenzen steuerbar. Dabei bestimmt insbesondere der Gehalt an Verbindung (I) das Molekulargewicht, und zwar derart, dass je größer der Anteil an Verbindung (I) ist, desto geringer das erhaltene Molekulargewicht.

Obwohl bzgl. der Molekulargewichtsverteilung keinerlei Beschränkungen existieren, kann in dem erfindungsgemäßen Verfahren ein Umsetzungsprodukt (U) erhalten werden, das eine Molekulargewichtsverteilung (Polydispersitätsindex, PDI (M_{w}/Mₙ), wobei Mₙ zahlenmittleres Molekulargewicht und M_{w} gewichtsmittleres Molekulargewicht bedeutet) gemessen mit Gelpermeationschromatographie unter Verwendung von Polystyrol als Standard von = 4, vorzugsweise = 3, weiter bevorzugt = 2, insbesondere = 1,7 und in einzelnen Fällen auch = 1,3 besitzt.

Die Durchführung der radikalischen Polymerisation sowie geeignete Vorrichtungen sind dem Fachmann bekannt.

In einer bevorzugten Ausführungsform umfasst das erfindungsgemäße Verfahren die folgenden Stufen:
(i) Reaktion der Komponenten (A), (B) und (C) unter radikalischen Bedingungen unter Bildung eines Umsetzungsproduktes (U');
(ii) Reaktion des Umsetzungsproduktes (U') mit der Komponente (D) und gegebenenfalls weiteren radikalisch polymerisierbaren Monomeren (Komponente (A)), die sich von den in Stufe (i) eingesetzten radikalisch polymerisierbaren Monomeren unterscheiden.

Geeignete Komponenten (A), (B), (C) und (D) sind bereits vorstehend genannt. Die vorstehend genannten Reaktionsbedingungen gelten sowohl für Stufe (i) als auch für Stufe (ii).

Das in Stufe (i) erhaltene Umsetzungsprodukt (U') kann entweder gemäß dem Fachmann bekannten Methoden isoliert werden, z.B. durch Ausfällen mit einem unpolaren Lösungsmittel, z.B. Hexan, Abtrennung, gegebenenfalls Umfällung mit Hexan aus einem polaren Lösungsmittel, z.B. Chloroform, und gegebenenfalls Trocknen, z.B. im Vakuum, oder direkt - ohne weitere Aufarbeitung - in Stufe (ii) eingesetzt werden.

Die Zugabe eines zusätzlichen Initiators ist in Stufe (ii) nicht erforderlich. Das in Stufe (ii) erhaltene Umsetzungsprodukt (U) wird gemäß dem Fachmann bekannten Verfahren isoliert, z.B. durch Ausfällen mit einem unpolaren Lösungsmittel, z.B. Cyclohexan und gegebenenfalls Umfällung mit Cyclohexan oder einem anderen unpolaren Lösungsmittel aus einem polaren Lösungsmittel, z.B. Chloroform. Das erhaltene und isolierte Umsetzungsprodukt (U) wird vorzugsweise getrocknet, z.B. durch Sprühtrocknung oder Gefriertrocknung.

In einer weiteren bevorzugten Ausführungsform des erfindungsgemäßen Verfahrens werden die Komponenten (A), (B), (C) und (D) in einer Stufe umgesetzt.

Geeignete Komponenten (A), (B), (C) und (D) sowie geeignete Reaktionsbedingungen sind bereits vorstehend genannt.

Bevorzugt werden die Monomere (A) und (D) vorgelegt, besonders bevorzugt in einem vorstehend genannten organischen Lösungsmittel, und anschließend die Komponenten (C) und (D) zugegeben. Im Anschluss daran wird das Reaktionsgemisch unter den vorstehend genannten Reaktionsbedingungen umgesetzt. Das gewünschte Umsetzungsprodukt (U) wird im allgemeinen aus der Reaktionslösung durch Fällung in einem Nichtlösemittel (also einer Verbindung, in der das Umsetzungsprodukt (U) nicht oder nur geringfügig löslich ist) und anschließende Trocknung, z.B. Sprühtrocknung oder Vakuumtrocknung erhalten.

Mit Hilfe des erfindungsgemäßen Verfahrens ist es somit je nach Reaktionsführung dabei möglich, statistische Copolymere, Block- oder Multiblock- sowie Gradienten-(Co)Polymere, sternförmige Polymere, Pfropf-Copolymere und verzweigte (Co)Polymere herzustellen.

Dabei werden mit Hilfe der ersten bevorzugten Ausführungsform bevorzugt funktionalisierte Blockcopolymere erhalten.

Ein weiterer Gegenstand der vorliegenden Anmeldung ist ein mit Halogen enthaltenden Gruppen oder Sulfonylgruppen funktionalisiertes Umsetzungsprodukt (U), herstellbar nach dem erfindungsgemäßen Verfahren. Besonders bevorzugt ist das Umsetzungsprodukt (U) aus den vorstehend genannten bevorzugt eingesetzten Monomeren aufgebaut.

Ganz besonders bevorzugt sind mit dem erfindungsgemäßen Verfahren Polymere (Umsetzungsprodukte (U)) mit der folgenden Struktur herstellbar:
Poly(methylmethacrylat-b-(p-Chloromethylstyrol-co-Styrol),
Poly(methylmethacrylat-co-p-Chloromethylstyrol),
Poly(dodecylmethacrylat-co-p-Chloromethylstyrol,
Poly(ethylhexylacrylat-co-p-Chloromethylstyrol),
Poly(ethylhexylmethacrylat-co-p-Chloromethylstyrol),
Poly(hydroxyethylmethacrylat-co-p-Chloromethylstyrol),
Poly(hydroxyethylmethacrylat-co-methylmethacrylat-co-p-Chloromethylstyrol),
Poly(hydroxyethylacrylat-co-p-Chloromethylstyrol),
Poly(hydroxyethylacrylat-co-methylmethacrylat-co-p-Chloromethylstyrol).

Die nach dem erfindungsgemäßen Verfahren herstellbaren Umsetzungsprodukte (U) sind aufgrund ihrer Funktionalisierung insbesondere als Makroinitiatoren geeignet. Dabei können sie als Makroinitiatoren für jede Art von Reaktionen eingesetzt werden, worin eine entsprechende Funktionalisierung benötigt wird. Besonders bevorzugt werden die Umsetzungsprodukte (U) als Makroinitiatoren in der ATRP (atom transfer radical polymerization) und in der kationischen Polymerisation eingesetzt. Dabei werden Pfropfcopolymere erhalten, deren Eigenschaften in Abhängigkeit vom eingesetzten Makroinitiator und von der weiteren Pfropfreaktion und den darin eingesetzten Monomeren für bestimmte gewünschte Eigenschaften maßgeschneidert werden können.

Ein weiterer Gegenstand der vorliegenden Anmeldung ist daher die Verwendung eines Umsetzungsproduktes (U) als Makroinitiator zur Herstellung von Pfropfcopolymeren sowie ein Verfahren zur Herstellung von Pfropfcopolymeren durch Reaktion eines Umsetzungsproduktes (U) mit mindestens einem geeigneten Monomeren (Komponente (E)), wobei das Verfahren besonders bevorzugt eine kationische Polymerisation ist.

Die Herstellung von Pfropfcopolymeren durch eine Kombination von kontrollierter Polymerisation in Anwesenheit von Verbindungen der allgemeinen Formel (I) zur Herstellung eines funktionalisierten Makroinitiators und kationischer Polymerisation oder ATRP ist aus dem Stand der Technik nicht bekannt.

Diese Kombination ermöglicht die Herstellung maßgeschneiderter Pfropfcopolymere für zahlreiche Anwendungszwecke. Insbesondere sind auf diese Weise Pfropfcopolymere erhältlich, die aus aus polaren Monomeren durch radikalische Polymerisation erhältlichen Struktureinheiten und aus unpolaren Monomeren durch bevorzugt kationische Polymerisation erhältlichen Struktureinheiten aufgebaut sind.

### Komponente E:

Geeignete Monomere sind unter anderem abhängig davon, nach welchem Verfahren die Pfropfung erfolgt. Bevorzugte Verfahren sind ATRP oder kationische Polymerisation. Werden die gewünschten Pfropfcopolymere durch ATRP hergestellt, sind als Monomere alle üblicherweise für die ATRP geeigneten Monomere einsetzbar. Solche Monomere entsprechen den als Komponente (A) eingesetzten Monomeren und sind bereits vorstehend genannt.

Werden die gewünschten Pfropfcopolymere durch kationische Polymerisation hergestellt, sind als Monomere alle üblicherweise zur kationischen Polymerisation geeigneten Monomere einsetzbar. Geeignete Monomere sind Monomere mit ausreichend hoher Nucleophilie wie Olefine, Vinylether, Styrol und seine Derivate, Ether, Thioether, Ester, Acetale und Alkylenoxide. Bevorzugt werden in dem erfindungsgemäßen Verfahren als Monomere (Komponente (E)) Olefine, besonders bevorzugt Isobuten oder Gemische aus Isobuten mit α-Olefinen oder cyclische Ether, besonders bevorzugt Tetrahydrofuran (THF), Dioxolan (DXL) und Dioxan eingesetzt. Ganz besonders bevorzugt werden Tetryhydrofuran oder Isobuten eingesetzt.

Die bevorzugte Herstellung der Pfropfcopolymere erfolgt üblicherweise durch kationische Polymerisation, nach dem sogenannten "grafting from"-Mechanismus, bei dem Monomere von der Polymerhauptkette ausgehend aufgepfropft werden. Die kationische Polymerisation erfolgt gemäß dem Fachmann bekannten Verfahren, wobei das Umsetzungsprodukt (U) als Makroinitiator eingesetzt wird. Üblicherweise erfolgt die kationische Polymerisation (Pfropfung) durch Lösen des als Makroinitiator eingesetzten Umsetzungsproduktes (U) in einem polaren Lösungsmittel, z.B. Dichlormethan, Zugabe eines oder mehrerer Monomere (Komponente (E)) und bevorzugt zusätzliche Zugabe eines Coinitiators. Geeignete Coinitiatoren sind Lewis-Säuren wie Bortrifluorid, Aluminiumalkylchloride, z.B. Diethylaluminiumchlorid, Aluminiumalkyle, z.B. Triethylaluminium oder Trimethylaluminium und Titanhalogenide, z.B. TiCl₄ oder Silberperchlorat.

Die Komponente (E) wird in einem molaren Verhältnis zu den in dem als Makroinitiator eingesetzten Umsetzungsprodukt (U) vorhandenen Halogen oder Sulfonylchlorid enthaltenden Gruppen von im allgemeinen im molaren Verhältnis 10⁴ zu 1, bevorzugt 5000 zu 1, besonders bevorzugt 2000 zu 1 eingesetzt.

Die Initiatoreffizienz, bezogen auf den Umsatz der in dem Makroinitiator vorhandenen Halogen oder Sulfonylchlorid enthaltenden Gruppen, beträgt im allgemeinen 30 bis 100 %, bevorzugt 60 bis 100%.

Die erhaltenen Pfropfcopolymere zeigen einen leichten Anstieg der Molekulargewichtsverteilung gegenüber den entsprechenden Makroinitiatoren. Dennoch ist eine enge Molekulargewichtsverteilung festzustellen. Bevorzugt beträgt die Molekulargewichtsverteilung der Pfropfcopolymere ← 2,5, besonders bevorzugt ← 2.

Ein weiterer Gegenstand der vorliegenden Anmeldung sind Pfropfcopolymere herstellbar nach dem erfindungsgemäßen Verfahren.

Ganz besonders bevorzugte nach dem erfindungsgemäßen Verfahren herstellbare Pfropfcopolymere sind
Poly(methylmethacrylat-b-poly(Styrol-co-Chloromethylstyrol-g-Isobuten)),
Poly(methylmethacrylat-co-p-Chloromethylstyrol-g-Isobuten),
Poly(dodecylmethacrylat-co-p-Chloromethylstyrol-g-Isobuten),
Poly(ethylhexylacrylat-co-p-Chloromethylstyrol-g-Isobuten),
Poly(ethylhexylmethacrylat-co-p-Chloromethylstyrol-g-Isobuten),
Poly(hydroxyethylmethacrylat-co-(p-Chloromethylstyrol-g-Isobuten),
Poly(hydroxyethylmethacrylat-co-methylmethacrylat-co-p-Chloromethylstyrol-g-Isobuten),
Poly(hydroxyethylacrylat-co-p-Chloromethylstyrol-g-Isobuten),
Poly(hydroxyethylacrylat-co-methylmethacrylat-co-p-Chloromethylstyrol-g-Isobuten),
Poly(methylmethacrylat-b-poly(Styrol-co-Chloromethylstyrol-g-Tetrahydrofuran)),
Poly(methylmethacrylat-co-p-Chloromethylstyrol-g-Tetrahydrofuran),
Poly(dodecylmethacrylat-co-p-Chloromethylstyrol-g-Tetrahydrofuran),
Poly(ethylhexylacrylat-co-p-Chloromethylstyrol-g-Tetrahydrofuran),
Poly(ethylhexylmethacrylat-co-p-Chloromethylstyrol-g-Tetrahydrofuran),
Poly(hydroxyethylmethacrylat-co-(p-Chloromethylstyrol-g-Tetrahydrofuran),
Poly(hydroxyethylmethacrylat-co-methylmethacrylat-co-p-Chloromethylstyrol-g-Tetrahydrofuran),
Poly(hydroxyethylacrylat-co-p-Chloromethylstyrol-g-Tetrahydrofuran),
Poly(hydroxyethylacrylat-co-methylmethacrylat-co-p-Chloromethylstyrol-g-Tetrahydrofuran),
Poly(methylmethacrylat-b-poly(Styrol-co-Chloromethylstyrol-g-Dioxolan)),
Poly(methylmethacrylat-co-p-Chloromethylstyrol-g-Dioxolan),
Poly(dodecylmethacrylat-co-p-Chloromethylstyrol-g-Dioxolan),
Poly(ethylhexylacrylat-co-p-Chloromethylstyrol-g-Dioxolan),
Poly(ethylhexylmethacrylat-co-p-Chloromethylstyrol-g-Dioxolan),
Poly(hydroxyethylmethacrylat-co-(p-Chloromethylstyrol-g-Dioxolan),
Poly(hydroxyethylmethacrylat-co-methylmethacrylat-co-p-Chloromethylstyrol-g-Dioxolan),
Poly(hydroxyethylacrylat-co-p-Chloromethylstyrol-g-Dioxolan),
Poly(hydroxyethylacrylat-co-methylmethacrylat-co-p-Chloromethylstyrol-g-Dioxolan).

Die nach dem erfindungsgemäßen Verfahren herstellbaren Pfropfcopolymere können bevorzugt als Phasenvermittler, z.B. in Polymermischungen, Vermittler zur Haftverbesserung, zur Oberflächenhydrophilierung, als Bindemittel für Lackzusammensetzungen, in Beschichtungsmittelzusammensetzungen sowie in Waschund Reinigungsmitteln verwendet werden.

Die Copolymere des bevorzugt als Monomer (Komponente (E)) eingesetzten Isobutens finden beispielsweise Verwendung zur Herstellung von Kraftstoff- und Schmierstoffadditiven, als Elastomere, als Klebstoffe oder Klebrohstoffe, als Grundbestandteile von Dichtungs- und Versiegelungsmassen, in Beschichtungssystemen, insbesondere in solchen mit einer Barrierewirkung für Wasserdampf, sowie in Kaugummimassen.

Blockcopolymere des Isobutens mit vinylaromatischen Monomeren zeichnen sich insbesondere durch elastomere Eigenschaften und eine hohe Gasdichte aus, so dass sie insbesondere für Anwendungen geeignet sind, worin diese Eigenschaften erforderlich sind.

Die nachfolgenden Beispiele erläutern die Erfindung zusätzlich.

### Beispiele

### Eingesetzte Materialien

Methylmethacrylat (MMA), n-Dodecylmethacrylat (DDMA), 2-Ethylhexylacrylat (EHA), Styrol und p-Chlormethylstyrol wurden durch Durchleiten durch eine Säule aus basischem Al₂O₃ und anschließende Destillation gereinigt. Diphenylethen (DPE) wurde vor dem Einsatz destilliert. Azobisisobutyronitril (AIBN) wurde aus Methanol umkristallisiert. Isobuten (Linde) wurde durch eine Säule mit Molekularsieb und durch eine Säule mit Kalium auf Aluminiumoxid geleitet. Diethylaluminiumchlorid (DEAC) (1,0 molare Lösung in Hexan) wurde wie erhalten eingesetzt. Tetrahydrofuran (THF), Dioxolan (DXL), Dichlormethan und Toluol wurden für 48 Stunden über Calciumhydrid getrocknet und anschließend destilliert. Silberperchlorat wurde wie erhalten verwendet und unter Argon gelagert.

### Messungen

Die Molekulargewichte und Molekulargewichtsverteilungen wurden unter Verwendung eines Gelpermeationschromatographen der Firma Waters 510 mit UV (Waters 486) und RI (Waters 410) Detektoren und - im Falle der zweistufigen Herstellung des Umsetzungsproduktes (U) und der kationischen Polymerisation mit Isobuten - mit Showa Denko (Shodex K-802.5, K-804, K-805) Säulen, die mit einem Standard aus linearem Polystyrol kalibriert wurden bzw. - im Falle der einstufigen Herstellung des Umsetzungsproduktes (U) und der anschließenden Polymerisation mit THF bzw. DXL - mit Polymer Laboratories (PLgel 10µm MIXED B) Säulen, die mit linearem Polystyrol als Standard kalibriert wurden, bestimmt. Als Laufmittel wurde in beiden Fällen Chloroform eingesetzt.

Die ¹H-NMR Spektren wurden mit einem Bruker ARX 300 bei 300 K in CDCl₃ als Lösungsmittel gemessen.

### A 2-stufige Herstellung des Umsetzungsproduktes (U)

### A1. Poly(methylmethacrylat)

15 ml (131,28 mmol) Methylmethacrylat wurden durch drei Gefrier-, Pump- und Auftau-Cyclen entgast. Anschließend wurden 70 mg (0,3 mol-%) AIBN und 112,0 µl (0,45 mol-%) 1,1-Diphenylethen (DPE) zu dem Monomer zugegeben und die Mischung wurde bei 80 °C für 2 Stunden gerührt. Das erhaltene Polymer (Ausbeute: 4,2 g) wurde in 300 ml Hexan gefällt und aus CHCl₃ in 300 ml Hexan umgefällt und anschließend im Vakuum getrocknet.

### A2. Poly(methylmethacrylat-b-(p-Chlormethylstyrol-co-Styrol))

270 mg (0,015 mmol) Poly(methylmethacrylat) (PMMA), 2 ml (17 mmol) Styrol und 2 ml (14 mmol) 4-Chlormethylstyrol (CMS) wurden in 80 ml Toluol gelöst. Die Polymerisation wurde durch Erhitzen der Mischung auf 85 °C gestartet. Nach 3 Stunden wurde die Lösung auf Raumtemperatur gekühlt. Das Polymer wurde in 300 ml Cyclohexan gefällt und zweimal aus CHCl₃ mit 300 ml Cyclohexan umgefällt und durch Gefriertrocknung getrocknet (Ausbeute: 380 mg).

Die Bildung eines Blockcopolymers konnte an der Zunahme des Molekulargewichts der PMMA-Vorstufe (Produkt aus Beispiel A1.) mittels GPC (Gelpermeationschromatographie) gezeigt werden. Im Chromatogramm ist eine monomodale Molekulargewichtsverteilung mit nahezu keinem restlichen PMMA festzustellen, d.h. die Bildung der Blockcopolymere ist quantitativ. Der CMS-Gehalt des Blockcopolymers beträgt 19 mol-%, was durch ¹H-NMR-Spektroskopie und GPC festgestellt wurde.

### B Herstellung eines Pfropfcopolymers mit dem Umsetzungsprodukt aus Beispiel A2. als Makroinitiator

### B1. Poly(methylmethacrylat-b-poly(styrol-co-chloromethylstyrol-g-isobuten))

Die Pfropfcopolymerisationen wurden in einer Argonatmosphäre bei 80 °C unter Sauerstoffausschluss durchgeführt. 5 mg des Umsetzungsprodukts aus Beispiel A2. wurden in 4 ml CH₂Cl₂ gelöst und zu einer auf -80 °C vorgekühlten Mischung aus 15 ml Hexan und 10 ml CH₂Cl₂ gegeben. Es wurden definierte Mengen Isobuten (21 bis 84 mmol) zugegeben, und die Pfropfcopolymerisation wurde durch Zugabe von 6,5 ml (6,5 mmol) einer vorgekühlten 0,1 molaren Diethylaluminiumchloridlösung in Hexan gestartet. Nach einer Stunde wurde die Reaktion durch Zugabe von 3 ml vorgekühltem Methanol gestoppt.

In Tabelle 1 sind die Ergebnisse der Pfropfcopolymerisation der Umsetzungsprodukte (Makroinitiatoren) gemäß Beispiel A2. und Isobuten zusammengefasst.

**Tabelle 1**

| *Polymer* | *IB*_{*feed*} *mmol* | *M*_{*n*} *g*/*mol* | *M*_{*w*} *g*/*mol* | *PDI* |
|---|---|---|---|---|
| PMMA | - | 18.600 | 29.000 | 1,5 |
| P(MMA-b-CMS-co-St) | - | 27.000 | 42.000 | 1,6 |
| P(MMA-b-CMS-co-St-g-IB) | 5 | 57.700 | 109.000 | 1,9 |
| P(MMA-b-CMS-co-St-g-IB) | 10 | 59.300 | 110.000 | 1,9 |
| P(MMA-b-CMS-co-St-g-IB) | 16 | 68.400 | 120.000 | 1,7 |
| P(MMA-b-CMS-co-St-g-IB) | 21 | 73.000 | 133.000 | 1,8 |
| P(MMA-b-CMS-co-St-g-IB) | 26 | 75.500 | 155.000 | 2,0 |

Es bedeuten:
- IB_{feed}: Menge an Isobuten in mmol
- Mₙ: Zahlenmittleres Molekulargewicht
- M_{w}: Gewichtsmittleres Molekulargewicht
- PDI: Polydispersitätsindex [M_{w}/Mₙ]

Aus den mittels Gelpermeationschromatographie (GPC) ermittelten Ergebnissen, die in Tabelle 1 zusammengefasst sind, ergibt sich, dass das Umsetzungsprodukt aus Beispiel A2. als Makroinitiator in der Polymerisation von Isobuten dient. Es können keine Transferreaktionen nachgewiesen werden, was an der monomodalen Verteilung und der relativ geringen Polydispersität der erhaltenen Pfropfcopolymere erkennbar ist.

### C Einstufige Herstellung des Umsetzungsproduktes (U)

### C1. Poly(meth)acrylat Makroinitiatoren:

47,5 mmol (Meth)acrylat (Methylmethacrylat für MI1, Dodecylmethacrylat für MI2, Ethylhexylacrylat für MI3) und 3 mmol CMS wurden in 11 ml Toluol gelöst und durch drei Gefrier-, Pump- und Auftau-Cyclen entgast. Anschließend wurden 24,6 mg AIBN und 26,4 µl DPE zu der Monomerlösung zugegeben, und die Mischung wurde bei 80 °C für einen Tag gerührt. Die erhaltenen Copolymere (Ausbeuten: MI1: 4,5 g, MI2: 10,3 g, MI3: 6,0 g) wurden in 500 ml Methanol gefällt und aus CHCl₃ in 500 ml Ethanol umgefällt und im Vakuum getrocknet.

Der Einbau von CMS in das Polymer wurde durch ¹H-NMR belegt.

### D Pfropfcopolymere

### D1. Pfropfcopolymer GP1

160 mg MI1, 12 ml (148 mmol) THF und 40 mg (0,19 mmol) Silberperchlorat wurden in 10 ml Dichlormethan gelöst und bei Raumtemperatur für 20 Stunden gerührt. Anschließend wurden alle flüchtigen Verbindungen im Vakuum entfernt. Das erhaltene Produkt wurde in 10 ml Chloroform gelöst, filtriert und in 200 ml Methanol gefällt. Nach Trocknen im Vakuum wurden 370 mg Polymer erhalten.

### D2. Pfropfcopolymer GP2

260 mg MI2, 10 ml (124 mmol) THF und 20 mg (0,096 mmol) Silberperchlorat wurden in 10 ml Dichlormethan gelöst und bei Raumtemperatur 22 Stunden gerührt. Anschließend wurde die Lösung filtriert und in 200 ml Ethanol ausgefällt. Nach Trocknen im Vakuum wurden 380 mg Polymer erhalten.

### D3. Pfropfcopolymer GP3

520 mg MI2, 3 ml (42,9 mmol) Dioxolan und 40 mg (0,193 mmol) Silberperchlorat wurden in 7,5 ml Toluol gelöst und bei Raumtemperatur eine Stunde gerührt. Anschließend wurden alle flüchtigen Komponenten im Vakuum entfernt. Der Rückstand wurde in 20 ml Chloroform gelöst, filtriert und in 300 ml Ethanol gefällt. Nach Trocknen im Vakuum wurden 3,29 g Polymer erhalten.

### D4. Pfropfcopolymer GP4

480 mg MI3, 10 ml (124 mmol) THF und 60 mg (0,298 mmol) Silberperchlorat wurden in 7,5 ml Toluol gelöst und 24 Stunden bei Raumtemperatur gerührt. Anschließend wurden alle flüchtigen Verbindungen im Vakuum entfernt. Der Rückstand wurde dann in 15 ml Chloroform gelöst, filtriert und in 300 ml Ethanol gefällt. Nach Trocknen im Vakuum wurden 670 mg Polymer erhalten.

### D5. Pfropfcopolymer GP5

700 mg MI3, 3 ml (42,9 mmol) Dioxolan und 80 mg (0,386 mmol) Silberperchlorat wurden in 7,5 ml Toluol gelöst und bei Raumtemperatur 1 Stunde gerührt. Anschließend wurden alle flüchtigen Komponenten im Vakuum entfernt. Der Rückstand wurde in 30 ml Chloroform gelöst, filtriert und in 400 ml Ethanol gefällt. Nach Trocknen im Vakuum wurden 2,8 g Polymer erhalten.

In Tabelle 2 sind die molaren Massen und der Benzylchloridgehalt der in den Beispielen hergestellten Makroinitiatoren dargestellt:

**Tabelle 2:**

| *Charakterisierung der durch einstufige Reaktion hergestellten Makroinitiatoren* | | | | | |
|---|---|---|---|---|---|
| *Polymer* | *Ausbeute* | *M*_{*n*} | *M*_{*w*} | *PDI* | *Zusammensetzung (NMR)* |
| MI1 | 86,3% | 45.000 | 78.000 | 1,70 | MMA/CMS = 15 |
| MI2 | 82,2% | 69.900 | 99.900 | 1,43 | DDMA/CMS = 21 |
| MI3 | 65,7% | 38.400 | 60.400 | 1,57 | EHA/CMS = 16] |

Es bedeuten:
- Mₙ: zahlenmittleres Molekulargewicht
- M_{w}: gewichtsmittleres Molekulargewicht
- PDI: Polydispersitätsindex (M_{w}/Mₙ)
- Zusammensetzung:: molares Verhältnis der Komponente A zur Komponente D, ermittelt durch ¹H-NMR Spektroskopie

Alle hergestellten Makroinitiatoren waren als Initiatoren bei der Ringöffnungspolymerisation von cyclischen Ethern in Anwesenheit von Silberperchlorat als Coinitiator aktiv. Die Initiatoreffizienz, ermittelt durch ¹H-NMR, liegt zwischen 30 und 100%, bezogen auf den Benzylchloridumsatz (siehe Tabelle 3: Charakterisierung der P fropfcopolymere).

Die erfolgte Pfropfung konnte an einem Ansteigen der molaren Massen der erhaltenen Pfropfcopolymere, ermittelt durch Gelpermeationschromatographie (GPC) festgestellt werden.

Eine Charakterisierung der hergestellten Pfropfcopolymere durch Gelpermeationschromatographie (GPC) und ¹H-NMR ist in Tabelle 3 zusammengefasst.

**Tabelle 3:**

| *Charakterisierung der Pfropfcopolymere* | | | | | | |
|---|---|---|---|---|---|---|
| *Polymer* | *Initiator* *effizienz* | *Mn* | *Mw* | *PDI* | *Zusammensetzung* *(NMR)* | *Zusammensetzung* *(Gravimetrie)* |
| GP1 | 60,1% | 184.000 | 310.000 | 1,70 | MMA/THF 1/1,5 | MMA/THF 1/1,8 |
| GP2 | 100% | 105.000 | 207.000 | 1,98 | DDMA/THF 1/1,1 | DDMA/THF 1/1,6 |
| GP3 | 100% | 73.500 | 134.400 | 1,83 | DDMA/THF 1/16,8 | DDMA/DXL 1/18,4 |
| GP4 | 100% | 40.400 | 103.000 | 2,55 | EHA/THF 1/0,9 | EHA/THF 1/1,4 |
| GP5 | 30,0% | 46.100 | 72.200 | 1,59 | EHA/DXL 1/6,7 | EHA/DXL 1/7,5 |

Es bedeuten:
- Mₙ: zahlenmittleres Molekulargewicht
- M_{w}: gewichtsmittleres Molekulargewicht
- PDI: Polydispersitätsindex (M_{w}/Mₙ)
- Zusammensetzung:: molares Verhältnis der Komponente A zur Komponente D, ermittelt durch ¹H-NMR Spektroskopie, beziehungsweise durch Gravimetrie

In allen Fällen zeigt die Zusammensetzung, die durch Gravimetrie ermittelt wurde, einen höheren Polyethergehalt an als die mittels ¹H-NMR ermittelte Zusammensetzung. Alle Pfropfcopolymere sind elastomer, was die Trocknung erschwert. Somit ist die Überbestimmung des Umsatzes bei der Gravimetrie wahrscheinlich auf Lösungsmittelreste im Polymer zurückzuführen.

## Patentansprüche

1. Verfahren zur Herstellung eines mit Halogen oder Sulfonylchlorid enthaltenden Gruppen funktionalisierten Umsetzungsproduktes (U) durch Reaktion der folgenden Komponenten unter radikalischen Bedingungen:
a) mindestens ein radikalisch polymerisierbares Monomeres als Komponente (A),
b) mindestens eine Verbindung der allgemeinen Formel (I), als Komponente (B) 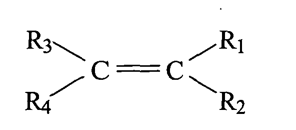 worin R₁ bis R₄ jeweils unabhängig voneinander für Wasserstoff, einen jeweils unsubstituierten oder substituierten Alkylrest, Cycloalkylrest, Aralkylrest, einen unsubstituierten oder einen substituierten aromatischen Kohlenwasserstoffrest stehen, mit der Maßgabe, daß mindestens zwei der Reste R₁ bis R₄ für einen unsubstituierten oder einen substituierten aromatischen Kohlenwasserstoffrest stehen, oder die Reste R¹ und R² oder R³ und R⁴ jeweils paarweise für einen substituierten oder unsubstituierten aromatischen Kohlenwasserstorf mit 6 bis 18 C-Atomen und eine funktionelle Gruppe, die in Konjugation zur C-C-Doppelbindung in der allgemeinen Formel I eine Mehrfachbindung zwischen einem C-Atom und einem Heteroatom aufweist, stehen,
c) mindestens ein radikalischer Initiator, als Komponente (C),
d) mindestens ein Halogen oder Sulfonylchlorid Gruppen enthaltendes, radikalisch polymerisierbares Monomeres, als Komponente (D).

2. Verfahren nach Anspruch 1, umfassend die folgenden Stufen:
(i) Reaktion der Komponenten (A), (B) und (C) unter radikalischen Bedingungen unter Bildung eines Umsetzungsproduktes (U');
(ii) Reaktion des Umsetzungsproduktes (U') mit der Komponente (D) und gegebenenfalls weiteren radikalisch polymerisierbaren Monomeren (Komponente (A)), die sich von den in Stufe (i) eingesetzten radikalisch polymerisierbaren Monomeren unterscheiden.

3. Verfahren nach Anspruch 1, **dadurch gekennzeichnet, dass** die Komponenten (A) bis (D) in einer Stufe umgesetzt werden.

4. Verfahren nach einem der Ansprüche 1 bis 3, **dadurch gekennzeichnet, dass** als Komponente (A) mindestens ein radikalisch polymerisierbares Monomer ausgewählt aus der Gruppe bestehend aus Styrol, Acryl- oder Methacrylsäure, C₁bis C₁₀-Alkyl- oder -hydroxyalkylacrylat oder -methacrylat, bevorzugt Methylmethacrylat; Vinylacetat, substituiertem oder unsubstituiertem Vinylpyrrolidon, oder ein Gemisch aus zwei oder mehr der genannten Monomere eingesetzt wird.

5. Verfahren nach einem der Ansprüche 1 bis 4, **dadurch gekennzeichnet, dass** als Komponente (B) mindestens eine Verbindung ausgewählt aus der Gruppe bestehend aus 1,1-Diphenylethylen, Alkoxydiphenylethylen, 1,1-Dinaphthalinethylen, 4,4-Vinylidenbis(N,N'-dimethylanilin), 4,4-Vinylidenbis(1-aminobenzol), cis-Stilben, trans-Stilben, α-Phenylacrylsäuremethylester, α-Phenylmethacrylsäuremethylester, α-Phenylacrylnitril, α-Phenylmethacrylnitril oder einem Gemisch aus zwei oder mehr davon eingesetzt wird.

6. Verfahren nach einem der Ansprüche 1 bis 5, **dadurch gekennzeichnet, dass** als Komponente (D) 4-Chlormethylstyrol eingesetzt wird.

7. Mit Halogen oder Sulfonylchlorid enthaltenden Gruppen funktionalisiertes Umsetzungsprodukt (U) herstellbar nach einem Verfahren gemäß einem der Ansprüche 1 bis 6.

8. Verwendung eines Umsetzungsproduktes (U) gemäß Anspruch 7 als Makroinitiator zur Herstellung von Pfropfcopolymeren.

9. Verfahren zur Herstellung von Pfropfcopolymeren durch Reaktion eines Umsetzungsproduktes (U) gemäß Anspruch 7 mit mindestens einem geeigneten Monomeren, als Komponente E.

10. Verfahren nach Anspruch 9, **dadurch gekennzeichnet, dass** die Reaktion eine kationische Polymerisation ist.

11. Verfahren nach Anspruch 9 oder 10, **dadurch gekennzeichnet, dass** die Monomere (E) ausgewählt sind aus der Gruppe bestehend aus Olefinen, bevorzugt Isobuten oder Gemischen aus Isobuten mit α-Olefinen und cyclischen Ethern, bevorzugt Tetrahydrofuran (THF), Dioxolan (DXL) und 1,4-Dioxan.

12. Verfahren nach einem der Ansprüche 9 bis 11, **dadurch gekennzeichnet, dass** Lewis-Säuren wie Bortrifluorid, Aluminiumalkylchloride wie Diethylaluminiumchlorid, Aluminiumalkyle wie Triethylaluminium oder Trimethylaluminium, Titanhalogenide wie TiCl₄ oder Silberperchlorat als Coinitiator eingesetzt werden.

13. Pfropfcopolymere herstellbar nach einem Verfahren gemäß einem der Ansprüche 9 bis 12.

14. Verwendung von Pfropfcopolymeren gemäß Anspruch 13 als Phasenvermittler, z.B. in Polymermischungen, Vermittler zur Haftverbesserung, zur Oberflächenhydrophilierung, als Bindemittel für Lackzusammensetzungen, in Beschichtungsmittelzusammensetzungen sowie in Wasch- und Reinigungsmitteln.
